# EUROPÄISCHE PATENTSCHRIFT

(11) **EP 0 790 170 B1**
(45) Veröffentlichungstag und Bekanntmachung des Hinweises auf die Patenterteilung: **28.06.2000**
(21) Anmeldenummer: 97102251.2
(22) Anmeldetag: 12.02.1997
(51) Int. Cl.: B62D 7/18, B60B 3/16

(54) **Aluminium-Achsschenkel oder Radträger mit eingesetztem Stahlzapfen und Verfahren zu dessen Herstellung**
Aluminum steering knuckle or wheel support with incorporated steel-pin and process for manufacturing the same
Porte-fusée en aluminium ou support de roue avec un tourillon en acier incorporé et procédé pour sa fabrication

(30) Priorität: 19.02.1996 DE 19606079
(43) Veröffentlichungstag der Anmeldung: 20.08.1997
(73) Patentinhaber: CARL DAN. PEDDINGHAUS GMBH & CO. KG, 58256 Ennepetal (DE); Bayerische Motoren Werke Aktiengesellschaft, 80788 München (DE)
(72) Erfinder: Oberloher, Martin, 85405 Nandlstadt (DE)
(74) Vertreter: Füchsle, Klaus, Dipl.-Ing.

(56) Entgegenhaltungen:
- EP-A- 0 020 204
- DE-A- 2 349 731
- DE-U- 7 201 832

## Beschreibung

Die Erfindung betrifft einen Achsschenkel oder Radträger gemäß dem Oberbegriff von Patentanspruch 1 sowie ein Verfahren zur Herstellung eines Achsschenkels oder Radträgers.

Heckgetriebene Fahrzeuge besitzen an der Vorderachse Achsschenkel, die jeweils das lenkbare Rad tragen und um einen Achsschenkelbolzen schwenkbar sind.

Im Stand der Technik besitzen heckgetriebene Fahrzeuge meist an der Vorderachse stahlgeschmiedete Achsschenkel mit Zapfen. Die Zapfen dienen jeweils zur Aufnahme eines Radlagers, der Radnabe, der Bremsscheibe und letztlich des eigentlichen Rades.

Frontgetriebene Fahrzeuge weisen an der Hinterachse einen Radträger auf, in dem entweder ein Stahlzapfen zur Aufnahme des Radlagers integriert ist, oder aber an dem das Radlager als Einheit direkt angeschraubt ist.

Der Vorteil stahlgeschmiedeter Achsschenkel oder Radträger mit Zapfen liegt in den sehr hohen Festigkeitswerten, wie beispielsweise sehr hohen Streckgrenzen. Der Nachteil stahlgeschmiedeter Achsschenkel oder Radträger mit Zapfen liegt jedoch darin, daß diese Bauteile relativ schwer sind und somit den Bemühungen entgegenstehen, das Fahrzeuggewicht insbesondere von Automobilen zu verringern.

Die deutsche Offenlegungsschrift DE-A-2 349 731 beschreibt ein Gelenkteil, das als einstückiges Gußteil geformt ist und ein oberes Gelenk, Bremsträger, einen Steuerarm und eine Steueranschlagfassung sowie Fassungen zur Montage von Staubschutzblechen aufweist. Die Achsöffnung wird in dem Gußstück in spanabhebender Weise ausgebildet und die Achse, die aus einem Schmiedestück besteht, durch Schrumpfen eingepaßt.

Das deutsche Gebrauchsmuster DE-U-7 201 832 beschreibt eine Radlagerung für Kraftfahrzeuge mit inneren und äußeren Lagerteilen sowie einem Achsschenkel. Eine Halteeinrichtung hält einen Gewindezapfen des ersten inneren Lagerteils, der sich durch eine Bohrung im Achsschenkel erstreckt, und verspannt dabei ein zweites inneres Lagerteil zwischen dem Achsschenkel und dem ersten inneren Lagerteil. Die Radlagereinheit ist als zweireihiges Schrägkugellager ausgebildet. Die Verwendung eines Aluminiumkörpers ist im deutschen Gebrauchsmuster DE-U-7 201 832 nicht offenbart.

Um das Gewicht der Achsschenkel oder Radträger zu verringern, wurden auch Aluminium-Achsschenkel entwickelt, die mittels Kokillenguß hergestellt werden. An dem Aluminiumgußkörper wird ein Radlager angeschraubt. Von der äußeren Form unterscheiden sich die Aluminium-Achsschenkel oder Radträger deutlich von den stahlgeschmiedeten Achsschenkeln. Die Aluminium-Achsschenkel oder Radträger besitzen keinen integrierten Aluminium-Zapfen, weil ein Aluminium-Zapfen die vom Rad über die Radlager übertragenen Kräfte und Momente nicht übertragen kann. Ein Vergleich der Elastizitätsmodule von Stahl und Aluminium zeigt die hohe Elastizität von Aluminium. Um dennoch eine gewünschte Festigkeit zu erzielen, muß das Radlager am Aluminiumgußkörper an einer Stelle befestigt werden, an der der Aluminiumgußkörper ausreichend bemessen ist, um die auftretenden Kräfte und Momente sicher zu übertragen. Dies führt jedoch zu einer Radlagereinheit mit großem Innendurchmesser, wodurch die Radlagereinheit hohe Kosten verursacht. Des weiteren wird die Gewichtseinsparung bei der Verwendung eines Gußkörpers aus Aluminium durch die schwere Radlagereinheit wieder weitgehend kompensiert.

Die Europäische Patentanmeldung EP-A-0 020 204 zeigt einen Achsschenkel mit einem Zapfen, der in einen Grundkörper eingesetzt ist. Der Zapfen trägt die Radlagereinheit und ist gegen den Innenring des Lagers verspannt. Im Bereich des Grundkörpers ist der Zapfen eingepreßt. Die EP-A-0 020 204 stellt den nächstkommenden Stand der Technik dar und ist die Basis für den Oberbegriff des Anspruchs 1.

Der Erfindung liegt die Aufgabe zugrunde, einen Achsschenkel oder Radträger mit niedrigem Gewicht zu entwickeln, der kostengünstig herzustellen ist und die auftretenden Kräfte und Drehmomente sicher aufnehmen und übertragen kann.

Die Aufgabe der Erfindung wird durch einen Achsschenkel oder Radträger mit den Merkmalen des Anspruchs 1 gelöst. Das Verfahren zur Herstellung des Achsschenkels oder Radträgers ist durch die Verfahrensschritte des Anspruchs 4 gekennzeichnet.

Indem ein Stahlzapfen in den Aluminiumkörper eingesetzt ist und die Radlagereinheit trägt, werden die über das Radlager auf den Achsschenkel oder Radträger übertragenen Kräfte von einem Bauteil aufgenommen, dessen mechanische Festigkeitswerte dem eines vergleichbaren Aluminiumbauteils deutlich überlegen sind.

Indem der Stahlzapfen gegen den Aluminiumkörper verspannt ist, treten keine Schwierigkeiten bei der Werkstoffpaarung zwischen dem Aluminiumkörper und dem Stahlzapfen auf.

Die Verwendung einer Dehnschraube als Befestigungselement zwischen Stahlzapfen und Aluminiumkörper besitzt den Vorteil, daß der Stahlzapfen sehr betriebssicher mit dem Aluminiumkörper verspannt werden kann. Aufgrund des für Dehnschrauben charakteristischen langen Dehnweges bei einer vorgegebenen Schraubenkraft, sind diese besonders dazu geeignet, im vorliegenden Fall und insbesondere unter wechselnden Beanspruchungen ein dauerhaftes und sicheres Verspannen des Stahlzapfens mit dem Aluminiumkörper zu gewährleisten.

Vorzugsweise ist der Stahlzapfen in den Aluminiumkörper eingepreßt. Durch das Einpressen des Stahlzapfens in den Aluminiumkörper wird bereits eine sehr leistungsfähige, d.h. stabile Verbindung zwischen den beiden Bauteilen erzielt, die durch das oben beschriebene Verspannen des Stahlzapfens mit dem Aluminiumkörper noch verbessert wird.

Der Stahlzapfen ist mit einem Innengewinde versehen, das in Längsrichtung des Stahlzapfens verläuft und in welches ein Befestigungselement eingreift. Diese Ausführung des Stahlzapfens gestattet es einerseits, daß ein geeignetes Befestigungselement mit dem Stahlzapfen verschraubt wird, andererseits wird der für die Festigkeit des Stahlzapfens wichtige äußere Ringquerschnitt des Stahlzapfens nicht durch abrupte Querschnittsänderungen oder Kerben geschwächt.

Vorzugsweise besteht die Radlagereinheit aus einem zweireihigen Schrägkugellager. Aufgrund ihres kleinen axialen Platzbedarfes, der großen Stützbasis und damit Momententragfähigkeit und des geringen Gewichtes sind zweireihige Schrägkugellager für den Aluminium-Achsschenkel oder Radträger der Erfindung besonders geeignet.

Nachfolgend wird die Erfindung rein beispielhaft anhand der beigefügten Zeichnungen beschrieben, in denen:
- Fig. 1: einen Schnitt durch den Achsschenkel oder Radträger gemäß der vorliegenden Erfindung; und
- Fig. 2: eine Seitenansicht des Achsschenkels oder Radträger in Blickrichtung von der Fahrzeugmitte her darstellt.

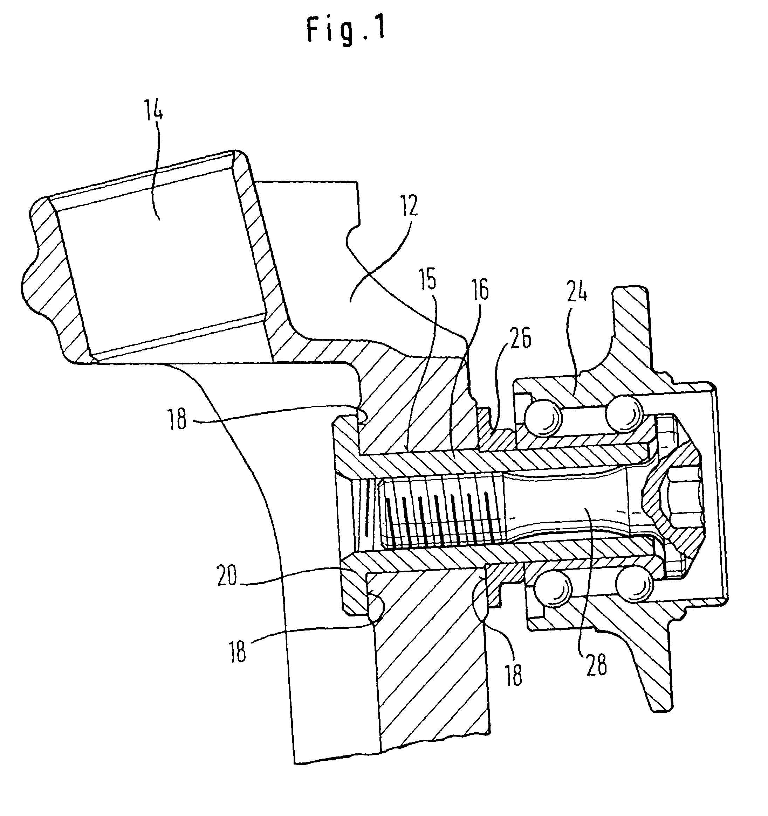

Fig. 1 zeigt einen Aluminium-Achsschenkel oder Radträger mit eingesetztem Stahlzapfen gemäß der vorliegenden Erfindung.

Ein Aluminiumkörper, dessen Rohling durch einen Gieß- oder Schmiedevorgang gebildet wird, ist mit Referenzzeichen 12 bezeichnet. Der Körper 12 kann neben Aluminium auch aus anderen Werkstoffen gebildet sein, die gegenüber den stahlgeschmiedeten Bauteilen im Stand der Technik eine deutliche Gewichtsersparnis mit sich bringen und vergleichbare mechanische Eigenschaften besitzen. Da Aluminium jedoch die bevorzugte Materialvariante darstellt, wird im folgenden stets der Begriff Aluminiumkörper verwendet. Nach dem Gießen oder Schmieden des Rohlings wird dieser an sämtlichen Kontaktstellen zu anderen Bauelementen bearbeitet. So wird beispielsweise die Bohrung 14 zur Aufnahme des Feder-Dämpferbeins in einem Nachbearbeitungsschritt auf das gewünschte Maß gebracht. Des gleichen wird die Bohrung 15 im Aluminiumkörper 12 ausgebildet, die den Stahlzapfen 16 aufnimmt. Auch die Flächen 18 des Aluminiumkörpers 12 werden durch einen spanabhebenden Fertigungsschritt erhalten.

Der Stahlzapfen 16 wird vorzugsweise stahlgeschmiedet, wodurch sich eine sehr hohe mechanische Festigkeit ergibt. Selbstverständlich kann der Stahlzapfen aber auch auf eine andere, in der Technik bekannte Weise gefertigt werden. Der Stahlzapfen 16 ist mit einem Kopf 20 einstückig verbunden, dessen im Einbauzustand am Aluminiumkörper 12 anliegende Seite eben ausgebildet ist beziehungsweise zu der dem Kopf 20 des Stahlzapfens zugewandten, bearbeiteten Fläche 18 des Aluminiumkörpers 12 korrespondierend geformt ist.

Die äußere Mantelfläche des Stahlzapfens 12 wird ebenfalls spanabhebend bearbeitet, um einerseits eine Radlagereinheit aufzunehmen und andererseits im Zusammenwirken mit der Bohrung 15 des Aluminiumkörpers 12 der Verbindung zwischen Aluminiumkörper 12 und Stahlzapfen 16 eine definierte Festigkeit zu verleihen.

Der Stahlzapfen 16 trägt eine Radlagereinheit 24, die in der vorliegenden Ausführungsform als zweireihiges Schrägkugellager ausgebildet ist. Zweireihige Schrägkugellager werden vorzugsweise dann verwendet, wenn das Verhältnis zwischen Baulänge und radialer Bauhöhe gering ist. Aufgrund des kleinen axialen Platzbedarfs zweireihiger Schrägkugellager, des geringen Gewichts der gesamten Lagerung und der großen Stützbasis und damit Momententragfähigkeit der Lagerung, werden in der Technik häufig Schrägkugellager-Radlagerungseinheiten für nicht angetriebene Räder verwendet. An der Radlagereinheit 24 sind die Radnabe, die Bremsscheibe und letztlich das eigentliche Rad befestigt.

Die auf den Stahlzapfen 16 aufgeschobene Radlagereinheit 24 wird axial befestigt, indem diese gegen den Aluminiumkörper 12 verspannt wird. Hierzu ist zwischen dem Innenring der Radlagereinheit 24 und dem Aluminiumkörper 12 ein Distanzring 26 auf den Stahlzapfen 16 aufgeschoben, der sowohl der axialen Ausrichtung der Radlagereinheit dient und bei der axialen Befestigung derselben mitwirkt. Der Distanzring 26 ist ein rotationssymmetrischer Körper, der vorzugsweise aus Stahl gefertigt ist. Auf dem kleineren Außendurchmesser des Distanzringes 26 läuft eine Dichtlippe zum Schutz des Radlagers.

Die axiale Befestigung der Radlagereinheit wird durch ein geeignetes Befestigungselement erzielt, das mit dem Stahlzapfen 16 verbunden wird. Das Befestigungselement ist eine Dehnschraube 28, die in ein Innengewinde im Stahlzapfen 16 einschraubbar ist. Dazu ist der Stahlzapfen 16 längs seiner Mittelachse mit einer Bohrung und einem Innengewinde versehen. Die Dehnschraube 28 besitzt einen Kopf, der im eingebauten Zustand am Innenring der Radlagereinheit 24 anliegt, und diese gegen den Distanzring 26, den Aluminiumkörper 12 und wiederum den Kopf 20 des Stahlzapfens 16 verspannt. Somit ist die Radlagereinheit 24 fest mit dem Aluminiumkörper 12 verbunden und mittels eines geeigneten Distanzringes 26 axial ausgerichtet. Die Dehnschraube 28 wird vorzugsweise als Innensechskant-Taillenschraube ausgeführt. Selbstverständlich sind auch andere Befestigungsmittel möglich.

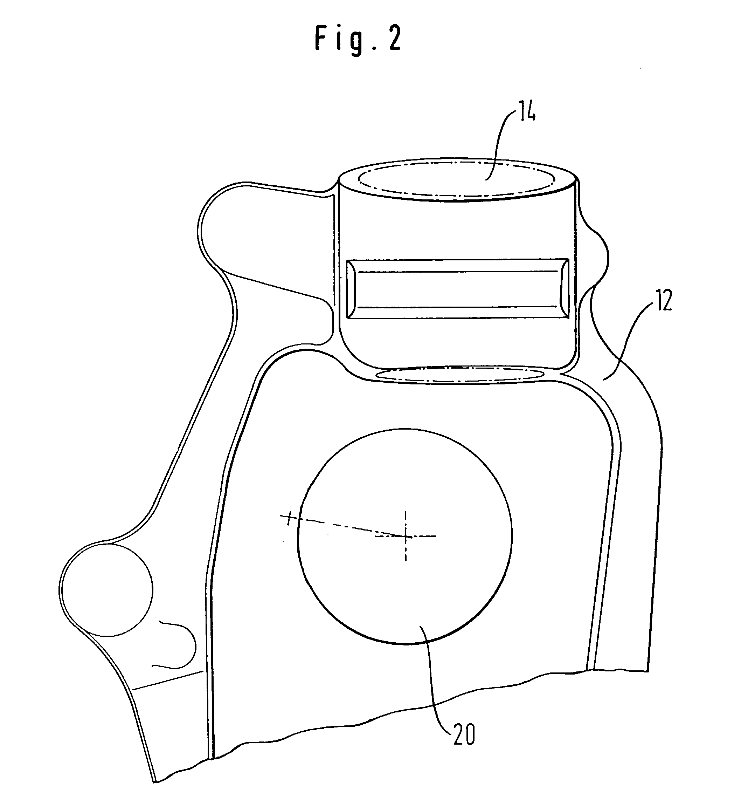

Fig. 2 zeigt eine Seitenansicht des in Fig. 1 dargestellten Achsschenkbolzens.

Die Herstellung des Aluminiumkörpers 12 kann auf verschiedene Weise erfolgen. Zunächst kann der Rohling, aus dem nach anschließender, spanabhebender Bearbeitung der Aluminiumkörper 12 entsteht, geschmiedet werden. Die hierbei zur Verwendung gelangenden Knetlegierungen sowie deren Wärmebehandlung bei der Bearbeitung führen zu hohen mechanischen Festigkeitswerten.

Der klassische Kokillenguß ist eine weitere Verfahrensalternative, die insbesondere bei hohen Stückzahlen sehr kostengünstig durchgeführt werden kann. Da die mechanischen Eigenschaften des Aluminium-Gußkörpers im Vergleich zum Schmiedeverfahren schlechter sind, muß dies durch eine entsprechende Dimensionierung, d. h. größere Wandstärken ausgeglichen werden. Dadurch geht allerdings teilweise der große Vorteil der Gewichtsersparnis bei der Verwendung eines Aluminiumkörpers wieder verloren.

Der Aluminiumkörper läßt sich ebenso mit einem Druckgußverfahren, wie dem Squeeze-Casting-Verfahren, oder einem Vakuumgußverfahren, wie dem Vakural-Verfahren fertigen. Diese Verfahren stellen einen Kompromiß zwischen dem Schmieden und dem Gießen mittels Kokillenguß dar und führen zu einem Aluminiumkörper mit mechanischen Festigkeitswerten, die zwischen denen des Schmiedeteils und des mittels Kokillenguß hergestellten Gußteiles liegen. Ein weiteres Verfahren zur Herstellung des Aluminiumkörpers ist das Thixoforming-Verfahren, bei dem Aluminium in teigiger Phase verarbeitet wird. Die mechanischen Eigenschaften des Aluminiumrohlings liegen nur unwesentlich unter denen des Aluminiumschmiedeteils, jedoch sind die Herstellungskosten deutlich geringer.

Der Aluminium-Achsschenkel oder Radträger gemäß der vorliegenden Erfindung, zeichnet sich durch ein sehr geringes Gewicht, trotzdem jedoch guten Festigkeitswerten aus. Indem ein Stahlzapfen in dem Aluminiumkörper aufgenommen wird und die auf dem Stahlzapfen getragene Lagereinheit gegen den Aluminiumkörper verspannt wird, wird ein Achsschenkel oder Radträger erhalten, der einfach herzustellen, einfach und bequem zu montieren ist und gegenüber den im Stand der Technik bekannten Achsschenkeln und Radträgern Gewichtsvorteile besitzt.

## Patentansprüche

1. Achsschenkel oder Radträger umfassend
- einen Metallkörper (12), an dem eine Radlagereinheit (24) befestigt ist; und
- einen Zapfen (16), der in den Metallkörper (12) eingesetzt ist, und der die Radlagereinheit (24) trägt; wobei der Zapfen (16) gegen den Metallkörper (12) verspannt ist;
dadurch gekennzeichnet, daß
- der Metallkörper (12) als Aluminiumkörper und der Zapfen als Stahlzapfen ausgebildet sind; und
- der Stahlzapfen (12) eine in Längsrichtung des Stahlzapfens verlaufende Bohrung besitzt, die mit einem Innengewinde versehen ist, in welches eine Dehnschraube (28) eingreift.

2. Achsschenkel oder Radträger nach Anspruch 1, dadurch gekennzeichnet, daß der Stahlzapfen (16) in den Aluminiumkörper (12) eingepreßt ist.

3. Achsschenkel oder Radträger nach einem oder mehreren der vorhergehenden Ansprüche, dadurch gekennzeichnet, daß die Radlagereinheit (24) ein zweireihiges Schrägkugellager ist.

4. Verfahren zur Herstellung eines Achsschenkels oder Radträgers mit eingesetztem Stahlzapfen (16), umfassend die Schritte:
- Gießen oder Schmieden eines Aluminiumkörpers (12),
- Ausbilden einer maßhaltigen Öffnung zur Aufnahme eines Stahlzapfens (16) in einem gegossenen oder geschmiedeten Aluminiumkörper (12);
- Einpressen des Stahlzapfens (16) in die Öffnung des Aluminiumkörpers (12);
- Aufschieben einer Radlagereinheit (24) auf den Stahlzapfen (16);
- axiales Sichern der Radlagereinheit (24) auf dem Stahlzapfen (16); und
- Verspannen des Stahlzapfens (16) mit dem Aluminiumkörper (12), wobei eine Dehnschraube (28) in ein Innengewinde eingreift, das in einer im Stahlzapfen (16) in Längsrichtung verlauf-enden Bohrung gebildet ist.

## Claims

1. Steering knuckle or wheel support comprising
- a metal body (12), to which a wheel bearing unit (24) is fastened; and
- a journal (16), which is inserted in the metal body (12) and which supports the wheel bearing unit (24); wherein the journal (16) is braced against the metal body (12);
characterised in that
- the metal body (12) is constructed as an aluminium body and the journal is constructed as a steel journal; and
- the steel journal (12) has a boring running in the longitudinal direction of the steel journal, which boring is provided with a female thread, into which an expansion screw (28) meshes.

2. Steering knuckle or wheel support according to claim 1, characterised in that the steel journal (16) is pressed into the aluminium body (12).

3. Steering knuckle or wheel support according to one or more of the previous claims, characterised in that the wheel bearing unit (24) is a twin-row angular ball bearing.

4. Method for manufacturing a steering knuckle or wheel support with inserted steel journal (16), comprising the steps:
- casting or welding of an aluminium body (12),
- construction of dimensionally accurate opening for accommodating a steel journal (16) in a cast or welded aluminium body (12);
- pressing of the steel journal (16) into the opening of the aluminium body (12);
- sliding of a wheel bearing unit (24) onto the steel journal (16);
- axial securing of the wheel bearing unit (24) on the steel journal (16); and
- bracing of the steel journal (16) with the aluminium body (12), wherein an expansion screw (28) meshes in a female thread, which is formed in a boring running in a longitudinal direction in the steel journal (16).

## Revendications

1. Porte-fusée ou support de roue, comprenant :
- un corps métallique (12), sur lequel est fixée une unité de porte-roue (24); et
- un tourillon (16), inséré dans le corps métallique (12), et portant l'unité de porte-roue (24); le tourillon (16) étant monté serré contre le corps métallique (12);
caractérisé en ce que
- le corps métallique (12) est réalisé en aluminium et le tourillon est réalisé sous la forme d'un tourillon en acier; et
- le tourillon en acier (16) comporte un perçage s'étendant dans la direction longitudinale du tourillon en acier, perçage doté d'un taraudage dans lequel s'engage une vis de traction (28).

2. Porte-fusée ou support de roue selon la revendication 1, caractérisée en ce que le tourillon en acier (16) est enfoncé dans le corps en aluminium (12).

3. Porte-fusée ou support de roue selon l'une ou plusieurs des revendications précédentes, caractérisée en ce que l'unité support de roue (24) est un roulement à billes à contact oblique, à deux rangées de billes.

4. Procédé de fabrication d'un porte-fusée ou support de roue doté d'un tourillon en acier (16) inséré, comprenant les étapes consistant à :
- mouler ou forger un corps d'aluminium (12);
- réaliser une ouverture à dimensions prescrites, pour recevoir un tourillon en acier (16), dans le corps en aluminium (12) moulé ou forgé;
- enfoncer le tourillon en acier (16) dans l'ouverture du corps en aluminium (12);
- enfiler une unité support de roue (24) sur le tourillon en acier (16);
- bloquer axialement l'unité support de roue (24) sur le tourillon en acier (16); et
- effectuer un montage serré du tourillon en acier (16) sur le corps en aluminium (12), une vis de traction (28) s'engageant dans un taraudage, constitué dans un perçage s'étendant en direction longitudinale dans le tourillon en acier (16).
